# EUROPEAN PATENT SPECIFICATION

(11) **EP 4 465 144 B1**
(45) Date of publication and mention of the grant of the patent: **03.12.2025**
(21) Application number: 24164389.9
(22) Date of filing: 19.03.2024
(51) Int. Cl.: G05D 1/646, G05D 1/82, B64C 13/50

(54) **FLIGHT DIRECTOR ASSIST SYSTEM FOR AIRCRAFT**
FLUGSTEUERUNGSUNTERSTÜTZUNGSSYSTEM FÜR FLUGZEUGE
SYSTÈME D'ASSISTANCE DE DIRECTEUR DE VOL POUR AÉRONEF

(30) Priority: 17.05.2023 US 202318318908
(43) Date of publication of application: 20.11.2024
(73) Proprietor: The Boeing Company, Arlington, VA 22202 (US)
(72) Inventor: FLANZER, Tristan, Arlington, 22202 (US); LEVINE, Benjamin D., Arlington, 22202 (US); MILLS, Nikos Damian, Arlington, 22202 (US); MCMAHON, Megan, Arlington, 22202 (US)
(74) Representative: St Clair Jones, Gregory Arthur Langley

(56) References cited:
- WO-A1-02/06115
- US-B1- 11 577 822
- US-B1- 6 199 028

## Description

### FIELD OF THE DISCLOSURE

The present disclosure is generally related to a pilot assistance system for an aircraft.

### BACKGROUND

As a result of extensive research and improvement, commercial air travel is one of the safest ways to travel. A great deal of research has been directed to improving the reliability of the aircraft itself. Additional research, as well as extensive training, has been directed to improving the performance of pilots and other aircraft crew members. Alongside such improvements, computers and automation systems have been developed to improve the situational awareness of aircraft crew members and to simplify flight deck operations, each of which further improve safe operation of commercial aircraft. Nevertheless, the level of pilot workload is such that any reductions in pilot workload can improve safe operation of the aircraft.

US6199028, according to its abstract, describes a device which incorporates three components: a tracking error estimator, a detector, and a red light indicator to alert a pilot to the potential loss of tracking control. The tracking error estimator uses the difference between the target and the desired response of the tracking aircraft to estimate the divergence from a desired tracking path. This difference is acquired by such systems as, for example, the Global Positioning System (GPS) and radar. The tracking error and its derivatives are then converted into three different metrics. The metrics represent percentage points when the tracking error and its derivatives are in an unstable or stable portion of its phase plane. Depending upon whether these metrics and/or their combinations are above a particular threshold, the detector and indicator will alert the pilot or operator whether or not corrective action needs to be taken. The threshold is determined by a predetermined logic tree. This system has applicability in a variety of tracking scenarios involving pilots or simulator system operators. Pilots, when they fly tactical aircraft, are preoccupied in a number of different tracking tasks which can be assisted by the invention described herein.

WO 0206115, according to its abstract, describes in an aircraft using fly-by-wire technology, the flight control functions have been integrated into the integrated modular avionics ("IMA") (410). The new flight control module ("FCM") (402) resides on the same data bus as the other modules in the IMA and receives power from the same power supply. In addition, the FCM is also connected to a separate power supply to add redundancy to the system. Several benefits arise from this configuration of an FCM. There is no longer a separate chassis needed for the flight control functions, thus resulting in a reduction in weight. In addition, the FCM now has access to all of the data on the IMA bus, instead of a limited amount of data over an ARINC 629 bus. The FCM provides augmentation signals to the actuator control electronics ("ACE") to aid in the flying of the aircraft. In the event of a failure of the FCM, the ACE still provides enough control to fly the airplane.

### SUMMARY

According to a particular aspect, an aircraft includes one or more line replaceable units including one or more processors. The aircraft also includes one or more actuators coupled to one or more flight control surfaces. The one or more actuators are communicatively coupled to at least one of the one or more line replaceable units to receive control signals. The aircraft also includes one or more sensors coupled to at least one of the line replaceable units and configured to generate sensor data indicative of a trajectory of the aircraft. While in a manual flight mode (i.e., when an autopilot system is not engaged), the one or more processors are configured to generate, by a flight director system, trajectory guidance data based on one or more trajectory setpoints. The one or more processors are also configured to, while in the manual flight mode, determine an error metric indicating deviation between the trajectory of the aircraft and the trajectory guidance data and send a control signal based on the error metric to the one or more actuators. The control signal is configured to cause the one or more actuators to move the one or more control surfaces. The one or more processors are configured to determine, based on a gain schedule, a gain to be applied to the error metric to generate a flight director assist output signal. The control signal is based, at least in part on the flight director assist output signal. The gain schedule specifies gain values that increase as an absolute value of the error metric decreases.

According to a particular aspect, a method includes obtaining, at one or more processors, trajectory data associated with an aircraft operating in a manual flight mode.

The method also includes obtaining, at the one or more processors, trajectory guidance data from a flight director system of the aircraft. The method also includes determining, at the one or more processors, an error metric indicating deviation between the trajectory data and the trajectory guidance data. The method also includes generating, at the one or more processors based on the error metric, a control signal for one or more control surfaces of the aircraft. The method also includes sending the control signal to one or more actuators to cause movement of the one or more control surfaces. The method also includes determining, based on a gain schedule, a gain to be applied to the error metric to generate a flight director assist output signal. The gain schedule specifies gain values that increase as an absolute value of the error metric decreases. The control signal is based, at least in part, on the flight director assist output.

According to a particular aspect, a (optionally non-transitory) computer-readable medium storing instructions that, when executed by one or more processors, cause the one or more processors to obtain trajectory data associated with an aircraft operating in a manual flight mode. The instruction further cause the one or more processors to obtain trajectory guidance data from a flight director system of the aircraft. The instruction further cause the one or more processors to determine an error metric indicating deviation between the trajectory data and the trajectory guidance data. The instruction further cause the one or more processors to generate, based on the error metric, a control signal for one or more control surfaces of the aircraft. The instruction further cause the one or more processors to send the control signal to one or more actuators to cause movement of the one or more control surfaces. The instruction further cause the one or more processors to determine, based on a gain schedule, a gain to be applied to the error metric to generate a flight director assist output signal. The gain schedule specifies gain values that increase as an absolute value of the error metric decreases. The control signal is based, at least in part, on the flight director assist output signal.

The features, functions, and advantages described herein can be achieved independently in various implementations or may be combined in yet other implementations, further details of which can be found with reference to the following description and drawings.

### BRIEF DESCRIPTION OF THE DRAWINGS

FIG. 1 is a block diagram that illustrates aspects of a pilot assistance system according to a particular implementation.
FIG. 2 is a diagram that illustrates aspects of flight display associated with the pilot assistance system of FIG. 1 according to a particular implementation.
FIG. 3 is a diagram that illustrates aspects of the pilot assistance system of FIG. 1 according to a particular implementation.
FIG. 4 is a flowchart of a method that can be implemented by the pilot assistance system of FIG. 1 according to a particular aspect.
FIG. 5 is a flowchart illustrating an example of a life cycle of the aircraft that includes aspects of the pilot assistance system of FIG. 1 according to a particular implementation.
FIG. 6 is a block diagram of an aircraft that includes aspects of the pilot assistance system of FIG. 1 according to a particular implementation.
FIG. 7 is a block diagram of a computing environment including a computing device configured to support aspects of computer-implemented methods and computer-executable program instructions (or code) according to the present disclosure.

### DETAILED DESCRIPTION

A pilot assistance system configured to reduce pilot workload during manual flight is disclosed herein. A particular aspect of the pilot assistance system is referred to herein as a flight director assist system. The flight director assist system interacts with aircraft flight control systems and a flight director system to assist a pilot with following trajectory guidance from the flight director when the aircraft is being operated manually. The flight director is a system that provides trajectory guidance to the pilot (e.g., via a visual indication of vertical and lateral flight path targets) based on one or more programmed trajectory setpoints. The flight director assist system assists the pilot with following the vertical and/or lateral flight path targets under certain circumstances. For example, the flight director assist system can reject certain disturbances that would otherwise cause the aircraft to deviate from the flight path target(s). By assisting the pilot with following the trajectory guidance from the flight director, the flight director assist system reduces pilot workload.

The figures and the following description illustrate specific exemplary embodiments. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific embodiments or examples described below, but by the claims and their equivalents.

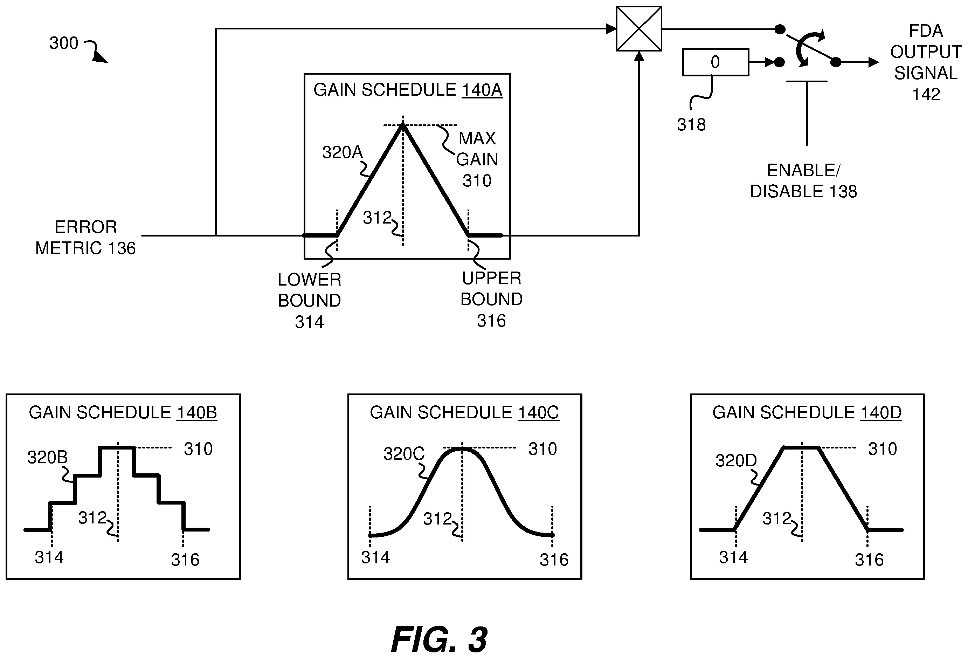

Particular implementations are described herein with reference to the drawings. In the description, common features are designated by common reference numbers throughout the drawings. In some drawings, multiple instances of a particular type of feature are used. Although these features are physically and/or logically distinct, the same reference number is used for each, and the different instances are distinguished by addition of a letter to the reference number. When the features as a group or a type are referred to herein (e.g., when no particular one of the features is being referenced), the reference number is used without a distinguishing letter. However, when one particular feature of multiple features of the same type is referred to herein, the reference number is used with the distinguishing letter. For example, referring to FIG. 3, multiple gain schedules are illustrated and associated with reference numbers 140A, 140B, 140C, and 140D. When referring to a particular one of these gain schedules, such as the gain schedule 140A, the distinguishing letter "A" is used. However, when referring to any arbitrary one of these gain schedules or to these gain schedules as a group, the reference number 140 is used without a distinguishing letter.

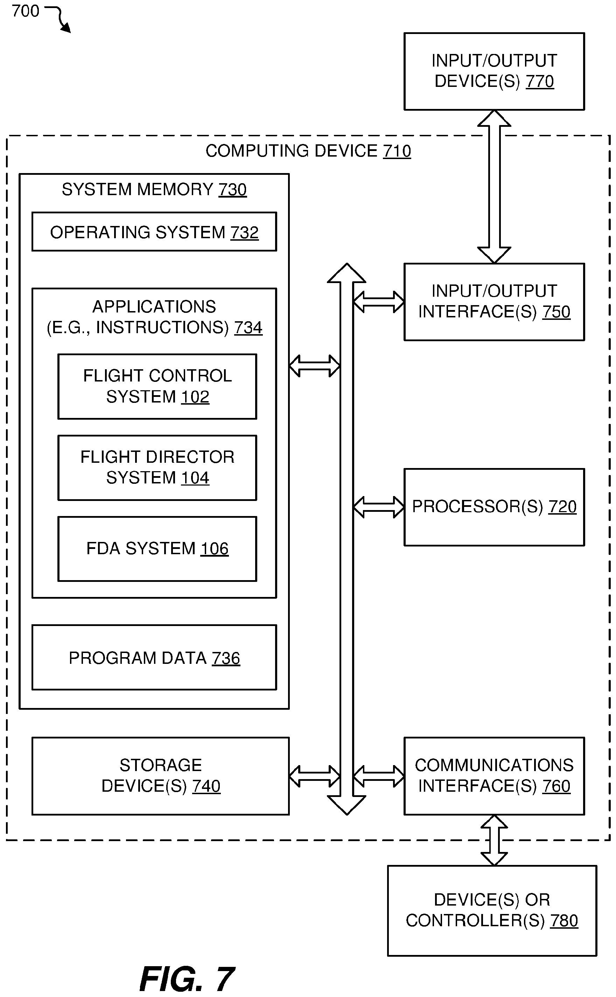

As used herein, various terminology is used for the purpose of describing particular implementations only and is not intended to be limiting. For example, the singular forms "a," "an," and "the" are intended to include the plural forms as well, unless the context clearly indicates otherwise. Further, some features described herein are singular in some implementations and plural in other implementations. To illustrate, FIG. 7 depicts aspects of computing device 710 that includes or coupled to one or more processors (e.g., "processor(s)" 720 in FIG. 7), which indicates that in some implementations the computing device 710 includes a single processor 720 and in other implementations the computing device 710 includes multiple processors 720. For ease of reference herein, such features are generally introduced as "one or more" features, and are subsequently referred to in the singular or optional plural (as indicated by "(s)") unless aspects related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

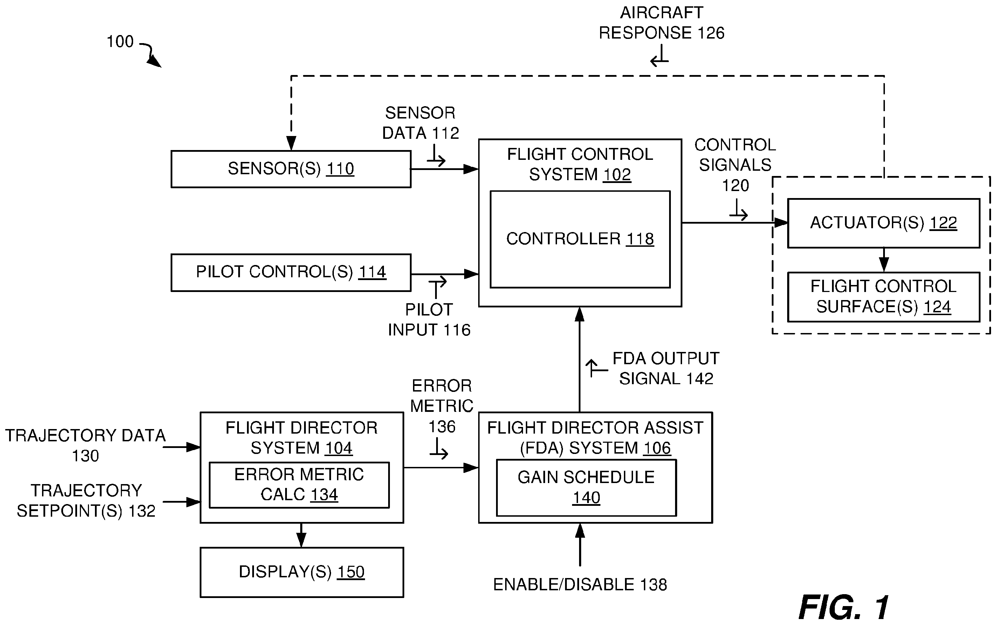

FIG. 1 is a block diagram that illustrates aspects of a pilot assistance system 100 of an aircraft according to a particular implementation. In the example illustrated in FIG. 1, various operations of the pilot assistance system 100 are initiated, performed, or controlled by one or more of a flight control system 102, a flight director system 104, and a flight director assist (FDA) system 106. As described further below, the pilot assistance system 100 is configured to reduce pilot workload during manual flight.

In the example illustrated in FIG. 1, the aircraft includes one or more flight control surfaces 124, which are coupled to one or more actuators 122. The flight control surface(s) 124 can include, for example and without limitation, ailerons, elevators, flaps, slats, spoilers, elevons, flaperons, and combinations or variants thereof. The actuator(s) 122 are communicatively coupled to the flight control system 102 to receive control signals 120. The control signals 120 cause the actuator(s) 122 to move one or more of the flight control surfaces 124 to modify a trajectory or flight parameters of the aircraft.

In FIG. 1, the flight control system 102 includes a controller 118 that implements feedforward control laws, feedback control laws, or both, to generate the control signals 120. In typical implementations, the controller 118 can use proportional, integral, derivative (PID) control based on pilot input 116, sensor data 112, and optionally other signals to generate the control signals 120. For example, during manual flight, a pilot can manipulate one or more pilot controls 114 (such as a control wheel or yoke, a sidestick, or a center stick) to adjust the pitch of the aircraft. In this example, the pilot control 114 or one or more sensors coupled thereto generates a signal (e.g., the pilot input 116) representing movement of the pilot control 114, force applied to the pilot control 114, or some other characteristic of the pilot's interaction with the pilot control 114. In this example, the signal (e.g., the pilot input 116) representing the pilot's interaction with the pilot control 114 can be filtered, limited, sampled, parameterized, or otherwise manipulated by the flight control system 102 to generate a command signal. The command signal is provided to the controller 118, which generates one or more control signals 120 based on the command signal as well as other data, such as the sensor data 112, a rate of change of the command signal, etc. As the flight control surface(s) 124 are moved in response to the control signal(s) 120, the aircraft responds (illustrated as aircraft response 126), and this aircraft response 126 can be detected by the sensor(s) 110, which are configured to generate sensor data 112 indicative of a trajectory of the aircraft. In this situation, the sensor(s) 110 generate updated sensor data 112, which can be filtered, limited, sampled, parameterized, or otherwise manipulated by the flight control system 102 to generate a feedback signal for the controller 118.

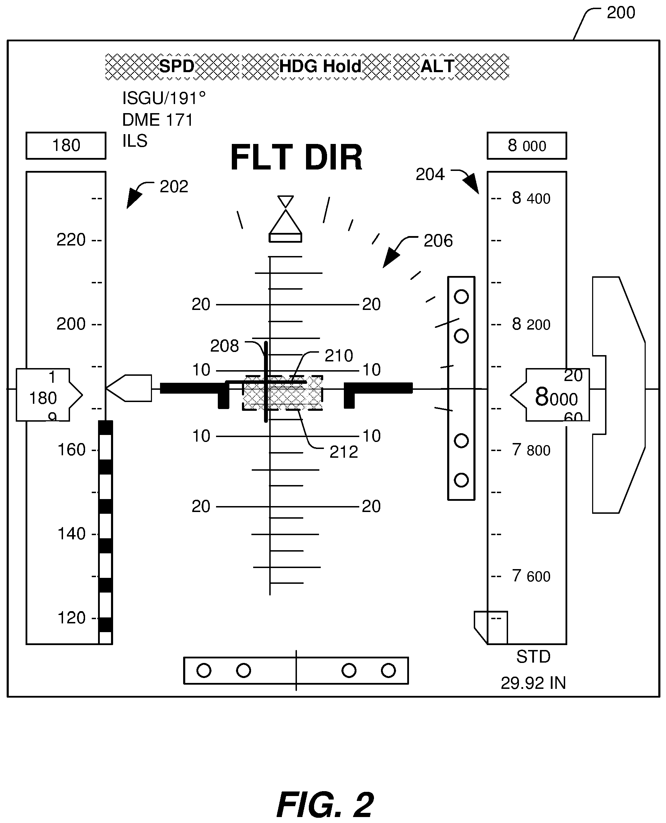

In FIG. 1, the flight director system 104 of FIG. 1 is a guidance system that is configured to generate, at one or more displays 150, trajectory guidance data indicating deviation between the trajectory of the aircraft (as indicated by trajectory data 130) and one or more trajectory setpoints 132. The flight director system 104 is configured to provide trajectory guidance indicators to one or more displays 150 (e.g., a primary flight display) based on the trajectory guidance data. The trajectory guidance indicators provide the pilot with visual cues to aid the pilot in flying the aircraft according to the trajectory setpoint(s) 132. FIG. 2 illustrates one example of a primary flight display that includes trajectory guidance indicators 208, 210.

While the flight director system 104 provides visual aids to help the pilot control the aircraft based on the trajectory setpoint(s) 132, the FDA system 106 actively assists the pilot with flying the aircraft when certain conditions (e.g., FDA enable criteria) are satisfied. In particular, in FIG. 1, the FDA system 106 is configured to provide a flight director assist output signal 142 ("FDA output signal" in FIG. 1) as an additional input to the flight control system 102 during manual operation of the aircraft (i.e., when an autopilot system is not engaged). The flight control system 102 is configured to generate the control signal(s) 120 based on the pilot input 116 as described above and further based on the FDA output signal 142.

The FDA system 106 is configured to generate the FDA output signal 142 based on an error metric 136. The error metric 136 indicates deviation between the trajectory of the aircraft and the trajectory guidance data determined by the flight director system 104. In the example illustrated in FIG. 1, the flight director system 104 includes an error metric calculator 134 ("error metric calc" in FIG. 1); however, in other implementations, the error metric calculator 134 can be a component of the FDA system 106 or the flight control system 102.

In FIG. 1, the FDA system 106 includes or has access to a gain schedule 140. In a particular aspect, gain values of the gain schedule 140 are dependent upon values of the error metric 136. For example, the gain values of the gain schedule 140 can be specified to use larger gain values when the error metric 136 has a near zero value and smaller gain values as the value of the error metric 136 approaches a boundary (e.g., a lower bound threshold or an upper bound threshold) associated with the FDA system 106. In some implementations, the gain schedule 140 specifies a zero gain value for values of the error metric 136 that are less than the lower bound threshold and for values of the error metric 136 that are greater than the upper bound threshold.

Alternatively, in some implementations, the FDA system 106 is disabled (via an enable/disable signal 138) when the value of the error metric 136 is less than the lower bound threshold or when the value of the error metric 136 is greater than the upper bound threshold. Specifying the gain schedule 140 in the manner described above means that the gain value applied by the FDA system 106 is largest when the trajectory of the aircraft matches, or nearly matches, the trajectory guidance, gets smaller as deviation between the trajectory and the trajectory guidance increases, and eventually is zero when the deviation between the trajectory and the trajectory guidance passes a boundary. Since the error metric 136 is based on a difference between the trajectory of the aircraft and the trajectory guidance, the error metric 136 can have positive values or negative values. Thus, the gain schedule 140 generally specifies gain values that increase as the absolute value of the error metric 136 decreases, and that decrease as the absolute value of the error metric 136 increases.

Conceptually, the FDA system 106 is configured to reduce the pilot's workload in manual flight by guiding the aircraft toward a trajectory specified by the trajectory guidance data when it is clear that this is the pilot's intent. To that end, the FDA system 106 is only enabled (or only generates an FDA output signal 142 based on the error metric 136) when the trajectory of the aircraft is near enough (based on one or more thresholds) to the trajectory guidance data to indicate that the pilot intends to fly the trajectory indicated by the trajectory guidance data. Thus, if the trajectory of the aircraft deviates significantly (based on the threshold(s)) from the trajectory guidance data, the FDA system 106 is disabled or generates a zero value FDA output signal 142, such that the control signal 120 output by the flight control system 102 is not based on (i.e., is independent of) the error metric 136. To enable the FDA system 106 when the FDA system 106 is disabled and the aircraft is being operated in a manual mode, the pilot must manually operate the aircraft to reduce deviation between trajectory of the aircraft and the trajectory guidance data from the flight director system 104 until one or more FDA enable criteria are satisfied.

In a particular aspect, a first FDA enable criterion is satisfied based on the error metric 136 having a value that is greater than a lower bound threshold associated with the FDA system 106 and that is less than an upper bound threshold associated with the FDA system 106. For example, the first FDA enable criterion can be satisfied if a value of the error metric 136 indicates that a vertical trajectory is within 2 degrees (e.g., between a positive 2 degree upper bound threshold and a negative 2 degree lower bound threshold) of a vertical trajectory indicated by the trajectory guidance data.

Additionally, in some implementations, a second FDA enable criterion is satisfied after a delay period following disabling of the FDA system 106 has elapsed. For example, if the FDA system 106 was enabled at a first time and was disabled due to some pilot action or another disturbance (e.g., one or more FDA disable criteria were satisfied), the second FDA enable criterion may impose a delay before re-enabling the FDA system 106. Such a delay eliminates control inputs from the FDA system 106 (e.g., the FDA output signal 142) to the flight control system 102 at a time when the pilot has indicated an intent to deviate from the trajectory guidance data or when the pilot is responding to an external disturbance that caused the FDA system 106 to be disabled.

In a particular aspect, when the FDA enable criteria include the second criterion based on a time delay, the first FDA enable criterion based on the error metric 136 must also be satisfied to enable the FDA system 106. Thus, in some implementations, the FDA enable criteria are satisfied based on satisfaction of the first criterion or based on satisfaction of the first criterion and the second criterion, but the FDA enable criteria are not satisfied based only on satisfaction of the second criterion. In still other implementations, other FDA enable criteria can be used, alone, or in combination with time-based and/or error metric-based FDA enable criteria.

In a particular aspect, an FDA disable criterion is satisfied when a value of the error metric 136 is less than a lower bound threshold associated with the FDA system 106 or when a value of the error metric 136 is greater than an upper bound threshold associated with the FDA system 106. For example, the FDA disable criterion can be satisfied if a value of the error metric 136 indicates that a vertical trajectory is more than 2 degrees greater than a vertical trajectory indicated by the trajectory guidance data or is more than 2 degrees less than a vertical trajectory indicated by the trajectory guidance data. In some implementations, the upper and lower bounds of the FDA enable criterion are the same as the upper and lower bounds of the FDA disable criterion. In some implementations, the upper and lower bounds of the FDA enable criterion are different from the upper and lower bounds of the FDA disable criterion. For example, the upper and lower bounds of the FDA enable criterion may specify a narrower range of values of the error metric 136 at which the FDA system 106 will be engaged than the range of values of the error metric 136 that will cause the FDA system 106 to be disengaged. In this example, the narrower range associated with enabling the FDA system 106 ensures that the pilot's intent to fly along the trajectory guidance is clear before the FDA system 106 is enabled. Further, in this example, having established that the pilot intends to fly the trajectory guidance and enabled the FDA system 106, the wider range of values associated with disabling the FDA system 106 allows the FDA system 106 to assist the pilot through a wider range of disturbances to the aircraft's trajectory.

In another particular aspect, an FDA disable criterion is satisfied when a change to the trajectory setpoint(s) 132 is detected. For example, if the pilot inputs a new heading, the FDA system 106 is disabled until the pilot flies the aircraft sufficiently near the new heading for the FDA enable criteria to be satisfied.

In another particular aspect, an FDA disable criterion may be satisfied based on a dwell time during which the error metric 136 has a non-zero value that is greater than a lower bound threshold associated with the FDA system 106 and is less than an upper bound threshold associated with the FDA system 106 satisfying a dwell time threshold (e.g., 2 seconds, 3 seconds, 5 seconds, or some other time period). In general, when the FDA system 106 is enabled and the error metric 136 has a non-zero value that is greater than a lower bound threshold and is less than an upper bound threshold, the FDA system 106 generates the FDA output signal 142 in a manner that tends to reduce the value of the error metric 136. Thus, over time in this situation, the error metric 136 should tend toward zero. If the error metric 136 remains at a non-zero value for longer than expected, this may be an indication that the pilot is intentionally flying the aircraft at some small offset from the trajectory guidance data. Accordingly, if this situation is detected, the FDA system 106 may be disabled so that the pilot does not have to fight the tendency of the FDA system 106 to reduce the error value. A threshold dwell time associated with a dwell time-based FDA disable criterion can be dependent on the value of the error metric 136 and the gain schedule 140. Generally, the threshold dwell time should be smaller for larger values of the error metric 136 and larger for smaller values of the error metric 136.

In a particular aspect, the functions of the flight control system 102, the flight director system 104, and the FDA system 106 described above are initiated, performed, or controlled by one or more line replaceable units of the aircraft. For example, a first set of one or more line replaceable units can perform functions of the flight control system 102, a second set of one or more line replaceable units can perform functions of the flight director system 104, and a third set of one or more line replaceable units can perform functions of the FDA system 106. In other examples, a single line replaceable unit can perform some or all of the functions of two of the flight control system 102, the flight director system 104, and the FDA system 106 described herein. In still other examples, a single line replaceable unit can perform some or all of the functions of all three of the flight control system 102, the flight director system 104, and the FDA system 106 described herein. Each of the line replaceable units can include, for example, one or more processors configured to execute instructions from a memory to perform some or all of the functions described above. Additionally, or alternatively, each of the line replaceable units can include special purpose circuitry, such as application-specific integrated circuits, field-programmable gate arrays, discrete logic circuits, etc., to perform some or all of the functions described above.

A technical benefit of the pilot assistance system 100 of FIG. 1 is that it reduces pilot workload during manual flight by helping the pilot follow trajectory guidance. For example, the FDA system 106 provides the FDA output signal 142 to assist the pilot with following the trajectory guidance while rejecting transient disturbances. Thus, the pilot assistance system 100 provides positive manual flight control of the trajectory and energy of the airplane to maintain stable flight and mitigates hazards associated with crew inattention due to high workload or other distractions resulting in improper flight path management.

Another technical benefit of the pilot assistance system 100 is providing a smooth transition between a flight mode in which the FDA system 106 is enabled and a flight mode in which the FDA system 106 is disabled. For example, the FDA system 106 operates to assist with control of the aircraft by comparing trajectory guidance from the flight director system 104 to the aircraft's actual trajectory. If the difference between the trajectory guidance and the actual trajectory is small, but non-zero (e.g., less than a threshold), the FDA system 106 operates to guide the aircraft back to flight along the trajectory guidance. If the difference between the trajectory guidance and the actual trajectory is large (e.g., greater than the threshold), the FDA system 106 is disabled and the pilot is fully in manual control (with no assistance from the FDA system 106). The gain schedule 140 of the FDA system 106 is specified such that the gain applied to generate the FDA output signal 142 gets smaller as the difference between the trajectory guidance and the actual trajectory approaches the threshold at which the FDA system 106 is disabled; thus, smoothing the transition between assisted flight and fully manual flight to reduce or prevent transient flight disturbances during the transition.

FIG. 2 is a diagram that illustrates aspects of a flight display 200 associated with the pilot assistance system of FIG. 1 according to a particular implementation. The flight display 200 includes examples of graphical representations of trajectory guidance data that can be presented via one or more displays (e.g., display(s) 150) of an aircraft. To illustrate, the display 200 can be presented at a primary flight display (PFD) of the aircraft.

In the example illustrated in FIG. 2, the display 200 includes an airspeed indicator 202, an altitude indicator 204, and an attitude indicator 206. The display 200 also includes trajectory guidance indicators generated by the flight director system 104 of FIG. 1. For example, the trajectory guidance indicators include a lateral trajectory guidance indicator 208 and a vertical trajectory guidance indicator 210. In the example illustrated in FIG. 2, the trajectory guidance indicators 208, 210 are not centered in the attitude indicator 206, which indicates that the aircraft is not precisely following the trajectory guidance. While distinct lateral and vertical trajectory guidance indicators 208, 210 are illustrated in FIG. 2, in some implementations, the lateral and vertical trajectory guidance indicators 208, 210 can be combined and/or integrated into a single indictor, such as a Heads Up Display (HUD) trajectory guidance indicator.

The display 200 also includes a box 212 which is a graphical representation of boundaries of a flight director assist region. The flight director assist region is defined by boundaries of the FDA enable and/or FDA disable criteria. For example, vertical sides of the box 212 graphically represent upper and lower bound thresholds of a lateral value of the error metric. In this example, if the lateral trajectory of the aircraft deviates from the lateral trajectory guidance (as graphically represented by the lateral trajectory guidance indicator 208) by more than either of these upper and lower bound thresholds, the FDA system 106 is disabled. In the example illustrated in FIG. 2, this situation would be graphically represented as the lateral guidance indicator 208 being located to the right of the box 212 or to the left of the box 212.

Horizontal sides of the box 212 graphically represent upper and lower bound thresholds of a vertical value of the error metric. In this example, if the vertical trajectory of the aircraft deviates from the vertical trajectory guidance (as graphically represented by the vertical trajectory guidance indicator 210) by more than either of these upper and lower bound thresholds, the FDA system 106 is disabled. In the example illustrated in FIG. 2, this situation would be graphically represented as the vertical guidance indicator 210 being located above the box 212 or below the box 212.

In some implementations, the box 212 (or another graphical representation of the boundaries of the flight director assist region) is displayed whether the FDA system 106 is enabled or disabled. For example, when the FDA system 106 is disabled, the box 212 may be displayed to indicate to the pilot what correction to the aircraft's trajectory is needed for the FDA system 106 to be enabled.

FIG. 3 is a diagram 300 that illustrates aspects of the pilot assistance system of FIG. 1 according to a particular implementation. In particular, the diagram 300 illustrates aspects of the gain schedule 140 and portions of the logic of the FDA system 106 of FIG. 1.

As illustrated in FIG. 3, when the FDA system 106 is enabled, based on the enable/disable signal 138, the FDA output signal 142 is based on the error metric 136, as modified by a gain selected based on the gain schedule 140. However, when the FDA system 106 is not enabled, based on the enable/disable signal 138, the FDA output signal 142 is independent of the error metric 136 (e.g., has a zero value 318).

FIG. 3 illustrates several different implementations of the gain schedule 140. The implementations shown in FIG. 3 are merely illustrative and should not be considered limiting. Additionally, while FIG 3 illustrates the gain schedules 140 as lines or curves (e.g., representing functions) in some implementations, the gain schedule 140 is defined by a look up table or other similar data structure rather than as a function.

Each of the gain schedules 140 of FIG. 3 is illustrated with a center line 312 corresponding to a zero value of the error metric 136. Each gain schedule 140 is configured such that a maximum gain value 310 is applied at or near the zero value (as a line 320 representing the gain value approaches the center line 312 from either direction). Each of the gain schedules 140 of FIG. 3 also includes a lower bound 314 and an upper bound 316. Each gain schedule 140 is configured such that a minimum gain (e.g., a zero gain value) is applied when the value of the error metric 136 is less than or equal to the lower bound 314 and is applied when the value of the error metric 136 is greater than or equal to the upper bound 316.

In the gain schedule 140A, a line 320A representing the gain values for various values of the error metric 136 extends linearly from the maximum gain value 310 to zero gain between the center line 312 and each bound 314, 316. In the gain schedule 140B, a line 320B representing the gain values for various values of the error metric 136 includes stair steps (or discontinuities) such that the gain value steps up at various values of the error metric 136. In the gain schedule 140C, a line 320C representing the gain values for various values of the error metric 136 corresponds to a smooth curve between the bounds 314, 316, with a peak (i.e., the maximum gain value 310) at the center line 312. In the gain schedule 140D, a line 320D representing the gain values for various values of the error metric 136 is similar to the line 320A except that, for the line 320D, the maximum gain value 310 is applied for error values equal to zero (at the center line 312) as well as for values sufficiently close to zero.

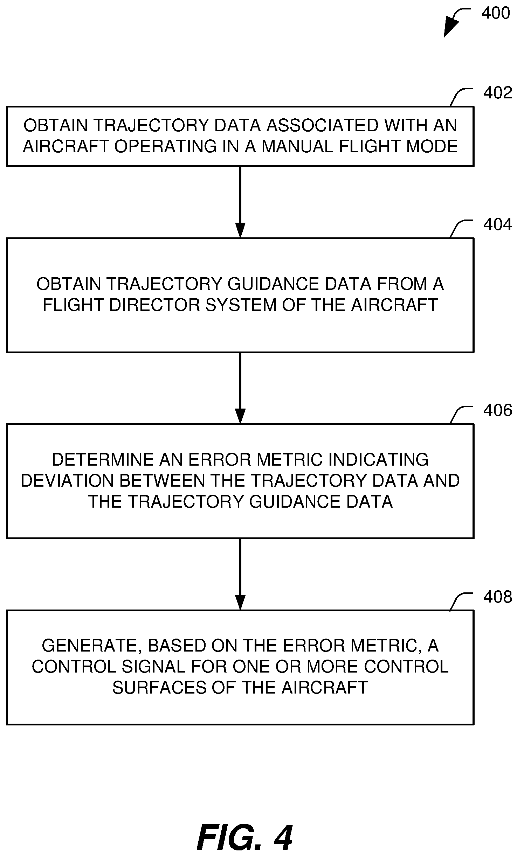

FIG. 4 is a flowchart of a method 400 that can be implemented by the pilot assistance system of FIG. 1 according to a particular aspect. For example, in some implementations, one or more operations of the method 400 can be initiated, performed, or controlled by one or more processors executing instructions from a memory, such as by one or more processor(s) of the flight control system 102, the flight director system 104, the FDA system 106, or a combination thereof, of FIG. 1.

The method 400 includes, at block 402, obtaining trajectory data associated with an aircraft operating in a manual flight mode. For example, pilot assistance system 100 of FIG. 1 can obtain the trajectory data 130, which is based at least in part, on the sensor data 112.

The method 400 also includes, at block 404, obtaining trajectory guidance data from a flight director system of the aircraft. For example, the flight director system 104 of the pilot assistance system 100 of FIG. 1 can generate trajectory guidance data based on the trajectory data 130 and the trajectory setpoint(s) 132.

The method 400 also includes, at block 406, determining an error metric indicating deviation between the trajectory data and the trajectory guidance data. For example, the error metric calculator 134 of the pilot assistance system 100 of FIG. 1 can determine values of the error metric 136 based on the trajectory data 130 and the trajectory guidance data generated by the flight director system 104.

The method 400 includes, at block 408, generating, based on the error metric, a control signal for one or more control surfaces of the aircraft. For example, the flight control system 102 of the pilot assistance system 100 of FIG. 1 generates the control signals 120. In this example, when the FDA system 106 is enabled, the control signals 120 are determined based in part on the FDA output signal 142. To illustrate, the FDA system 106 can determine a gain to be applied to the error metric 136 (based on the gain schedule 140) to generate the FDA output signal 142. In this illustrative example, the FDA output signal 142 is based on the error metric 136, and the control signal is based, at least in part, on the FDA output signal 142.

The method 400 can also include sending the control signal to one or more actuators to cause movement of the one or more control surfaces. For example, the flight control system 102 of FIG. 1 can send the control signals 120 to the actuator(s) 122 to move the flight control surface(s) 124.

In some implementations, one or more operations of the method 400 are performed when the FDA system 106 is enabled. In some implementations, the method 400 can also include determining whether to enable or disable the FDA system 106. For example, when the FDA system 106 is enabled, the method 400 can include detecting a condition that satisfies a flight director assist disable criterion and, based on detecting the condition that satisfies the flight director assist disable criterion, generating a second control signal independently of the error metric. For example, when the flight director assist disable criterion is satisfied in the example illustrated in FIG. 3, the FDA system 106 outputs the zero value 318, in which case a value of the FDA output signal 142 is independent of a value of the error metric 136.

A technical benefit of the method 400 is that the method 400 can be used to reduce pilot workload during manual flight by helping the pilot follow trajectory guidance. For example, the FDA system 106 provides the FDA output signal 142 to assist the pilot with following the trajectory guidance while rejecting transient disturbances, yet the FDA system still allows the pilot to intentional deviate from the trajectory guidance.

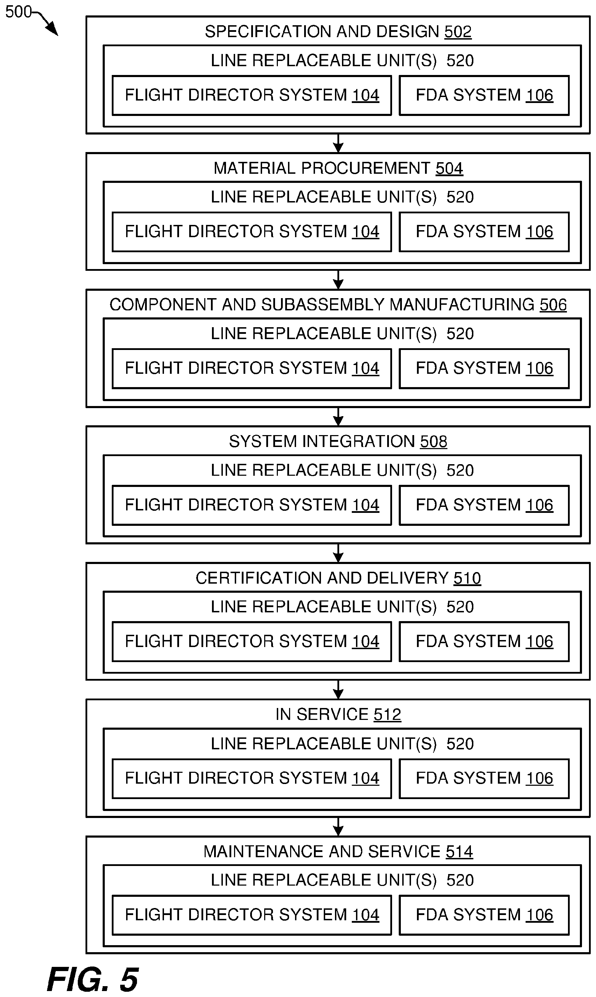

Referring to FIG. 5, a flowchart illustrative of a life cycle 500 of an aircraft that includes aspects of the pilot assistance system 100 of FIG. 1 according to a particular implementation. During pre-production, the exemplary life cycle 500 includes, at 502, specification and design of the aircraft. During specification and design of the aircraft, the life cycle 500 may include specification and design of one or more line replaceable units (LRUs) 520 that include aspects of the flight director system 104, the FDA system 106, or both. At 504, the life cycle 500 includes material procurement, which may include procuring materials for the LRU(s) 520 that include aspects of the flight director system 104, the FDA system 106, or both.

During production, the life cycle 500 includes, at 506, component and subassembly manufacturing and, at 508, system integration of the aircraft. For example, the life cycle 500 may include component and subassembly manufacturing of the LRU(s) 520 that include aspects of the flight director system 104, the FDA system 106, or both, and system integration of the LRU(s) 520, including integration of the aspects of the flight director system 104, the FDA system 106, or both. At 510, the life cycle 500 includes certification and delivery of the aircraft and, at 512, placing the aircraft in service. Certification and delivery may include certification of the LRU(s) 520 including aspects of the flight director system 104, the FDA system 106, or both, and placing them in service. While in service by a customer, the aircraft may be scheduled for routine maintenance and service, which may also include modification, reconfiguration, refurbishment, and so on. At 514, the life cycle 500 includes performing maintenance and service on the aircraft, which may include performing maintenance and service on the LRU(s) 520 that include aspects of the flight director system 104, the FDA system 106, or both.

Each of the stages or processes of the life cycle 500 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

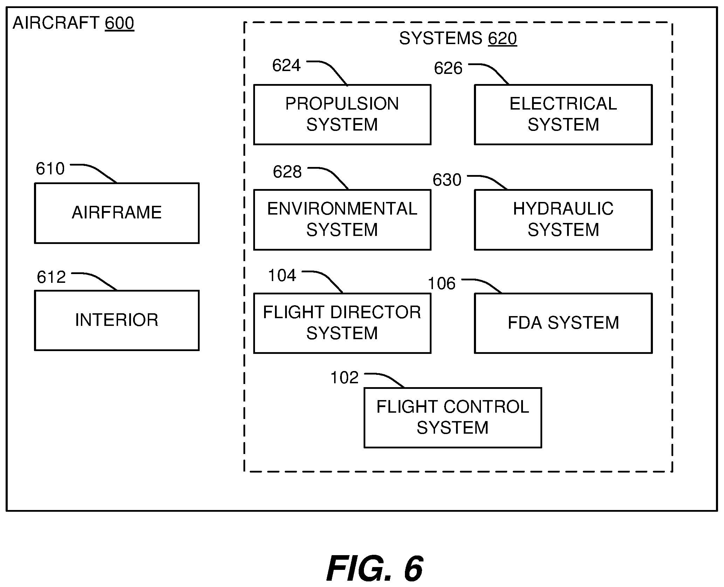

Aspects of the disclosure can be described in the context of an example of an aircraft, such as the aircraft 600 shown in FIG. 6. In the example of FIG. 6, the aircraft 600 includes an airframe 610 with a plurality of systems 620 and an interior 612. Examples of the plurality of systems 620 include one or more of a propulsion system 624, an electrical system 626, an environmental system 628, and a hydraulic system 630. In the example illustrated in FIG. 6, the systems 620 also include the flight director system 104, the FDA system 106, and the flight control system 102. The actuator(s) 122 of FIG. 1 are included in the electrical system 626, the hydraulic system 630, or both. Any number of other systems may also be included in the aircraft 600.

FIG. 7 is a block diagram of a computing environment 700 including a computing device 710 configured to support aspects of computer-implemented methods and computer-executable program instructions (or code) according to the present disclosure. For example, the computing device 710, or portions thereof, is configured to execute instructions to initiate, perform, or control one or more operations described with reference to FIGS. 1-6. In a particular aspect, the computing device 710 includes, is included within, or corresponds to one or more LRUs, such as one or more LRUs of the aircraft 600 of FIG. 6.

The computing device 710 includes one or more processors 720. The processor(s) 720 are configured to communicate with system memory 730, one or more storage devices 740, one or more input/output interfaces 750, one or more communications interfaces 760, or any combination thereof. The system memory 730 includes volatile memory devices (e.g., random access memory (RAM) devices), nonvolatile memory devices (e.g., read-only memory (ROM) devices, programmable read-only memory, and flash memory), or both. The system memory 730 stores an operating system 732, which may include a basic input/output system for booting the computing device 710 as well as a full operating system to enable the computing device 710 to interact with users, other programs, and other devices. The system memory 730 stores system (program) data 736.

The system memory 730 also includes one or more applications 734 (e.g., sets of instructions) executable by the processor(s) 720. As an example, the one or more applications 734 include instructions executable by the processor(s) 720 to initiate, control, or perform one or more operations described with reference to FIGS. 1-6. To illustrate, the one or more applications 734 include instructions executable by the processor(s) 720 to initiate, control, or perform one or more operations described with reference to the method 400 of FIG. 4. In a particular implementation, the system memory 730 includes a (optionally non-transitory) computer-readable medium storing the instructions (e.g., the application(s) 734), and the instructions, when executed by the processor(s) 720, cause the processor(s) 720 to initiate, perform, or control operations described with reference to the flight director system 104, the FDA system 106, and the flight control system 102.

The one or more storage devices 740 include nonvolatile storage devices, such as magnetic disks, optical disks, or flash memory devices. In a particular example, the storage devices 740 include both removable and non-removable memory devices. The storage devices 740 are configured to store an operating system, images of operating systems, applications (e.g., one or more of the applications 734), and program data (e.g., the program data 736). In a particular aspect, the system memory 730, the storage devices 740, or both, include tangible computer-readable media. In a particular aspect, one or more of the storage devices 740 are external to the computing device 710.

The one or more input/output interfaces 750 enable the computing device 710 to communicate with one or more input/output devices 770 to facilitate user interaction. For example, the one or more input/output interfaces 750 can include a display interface, an input interface, or both. The input/output interface 750 is adapted to receive input from a user, to receive input from another computing device, or a combination thereof. In some implementations, the input/output interface 750 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). In some implementations, the input/output device 770 includes one or more user interface devices and displays, including some combination of buttons, keyboards, pointing devices, displays, speakers, microphones, touch screens, and other devices.

The processor(s) 720 are configured to communicate with devices or controllers 780 via the one or more communications interfaces 760. For example, the one or more communications interfaces 760 can include a network interface. The devices or controllers 780 can include, for example, the sensor(s) 110 of FIG. 1, one or more other devices, or any combination thereof.

In some implementations, a (optionally non-transitory) computer-readable medium stores instructions that, when executed by one or more processors, cause the one or more processors to initiate, perform, or control operations to perform part or all of the functionality described above. For example, the instructions may be executable to implement one or more of the operations or methods described with reference to FIGS. 1-6. In some implementations, part or all of one or more of the operations or methods described with reference to FIGS. 1-6 may be implemented by one or more processors (e.g., one or more central processing units (CPUs), one or more graphics processing units (GPUs), one or more digital signal processors (DSPs)) executing instructions, by dedicated hardware circuitry, or any combination thereof.

Particular aspects of the disclosure are described below in sets of interrelated Examples:
According to Example 1, a method includes obtaining, at one or more processors, trajectory data associated with an aircraft operating in a manual flight mode; obtaining, at the one or more processors, trajectory guidance data from a flight director system of the aircraft; determining, at the one or more processors, an error metric indicating deviation between the trajectory data and the trajectory guidance data; and generating, at the one or more processors based, at least in part, on the error metric, a control signal for one or more control surfaces of the aircraft.

Example 2 includes the method of Example 1, further comprising sending the control signal to one or more actuators to cause movement of the one or more control surfaces.

Example 3 includes the method of Example 1 or Example 2, wherein the flight director system is configured to generate one or more trajectory guidance indicators based on the trajectory data and one or more trajectory setpoints and to provide the trajectory guidance indicators at a display of the aircraft.

Example 4 includes the method of Example 3, wherein a flight director assist system of the aircraft is further configured to provide, to the display, a graphical representation of boundaries of a flight director assist region.

Example 5 includes the method of Example 3 or Example 4, wherein the one or more trajectory guidance indicators include a lateral trajectory guidance indicator, a vertical trajectory guidance indicator, or a combination thereof.

Example 6 includes the method of any of Examples 1 to 5, wherein a flight director assist system of the aircraft is configured to generate a flight director assist output based on the error metric, and wherein the control signal is based, at least in part, on the flight director assist output.

Example 7 includes the method of any of Examples 1 to 6, wherein the trajectory data is based on sensor data from one or more sensors of the aircraft.

Example 8 includes the method of any of Examples 1 to 7 and further includes determining, based on a gain schedule, a gain to be applied to the error metric to generate a flight director assist output signal, wherein the control signal is based, at least in part, on the flight director assist output signal.

Example 9 includes the method of Example 8, wherein the gain schedule specifies gain values that increase as an absolute value of the error metric decreases.

Example 10 includes the method of Example 8 or Example 9, wherein the gain schedule specifies zero gain for a first value of the error metric, zero gain for a second value of the error metric, and a non-zero gain for a third value of the error metric, wherein the third value is between the first value and the second value.

Example 11 includes the method of Example 10, wherein the first value is a negative value of the error metric and the second value is a positive value of the error metric.

Example 12 includes the method of any of Examples 1 to 11 and further includes detecting a condition that satisfies a flight director assist disable criterion; and based on said detecting the condition that satisfies the flight director assist disable criterion, generating a second control signal independently of the error metric.

Example 13 includes the method of Example 12, wherein the flight director assist disable criterion is satisfied when a value of the error metric is less than a lower bound threshold associated with a flight director assist system or greater than an upper bound threshold associated with the flight director assist system.

Example 14 includes the method of Example 12 or Example 13, wherein the flight director assist disable criterion is satisfied when a change to one or more trajectory setpoints is detected.

Example 15 includes the method of any of Examples 12 to 14, wherein the flight director assist disable criterion is satisfied based on a dwell time during which the error metric has a non-zero value that is greater than a lower bound threshold associated with a flight director assist system and is less than an upper bound threshold associated with the flight director assist system satisfying a dwell time threshold.

Example 16 includes the method of any of Examples 1 to 15, wherein the control signal is generated based on the error metric responsive to detection of a condition that satisfies a flight director assist enable criterion.

Example 17 includes the method of Example 16, wherein the flight director assist enable criterion is satisfied based on the error metric having a value that is greater than a lower bound threshold associated with a flight director assist system and is less than an upper bound threshold associated with the flight director assist system.

Example 18 includes the method of Examples 16 or Example 17, wherein the flight director assist enable criterion is satisfied after a delay period following disabling of the flight director assist system.

According to Example 19, a device includes: a memory configured to store instructions; and a processor configured to execute the instructions to perform the method of any of Examples 1 to 18.

According to Example 20, a (optionally non-transitory) computer-readable medium stores instructions that, when executed by a processor, cause the processor to perform the method of any of Examples 1 to Example 18.

According to Example 21, an apparatus includes means for carrying out the method of any of Examples 1 to Example 18.

According to Example 22, an aircraft includes one or more line replaceable units including one or more processors; one or more actuators coupled to one or more control surfaces and communicatively coupled to at least one of the one or more line replaceable units to receive control signals; and one or more sensors coupled to at least one of the line replaceable units and configured to generate sensor data indicative of a trajectory of the aircraft, wherein the one or more processors are configured to, while in a manual flight mode: generate, by a flight director system, trajectory guidance data based on one or more trajectory setpoints; determine an error metric indicating deviation between the trajectory of the aircraft and the trajectory guidance data; and send a control signal based on the error metric to the one or more actuators.

Example 23 includes the aircraft of Example 22, wherein the control signal is configured to cause the one or more actuators to move the one or more control surfaces.

Example 24 includes the aircraft of Example 22 or Example 23 and further comprises a display, wherein the flight director system is configured to generate one or more trajectory guidance indicators based on the trajectory and the one or more trajectory setpoints and to provide the trajectory guidance indicators to the display.

Example 25 includes the aircraft of Example 24, wherein a flight director assist system is configured to generate a flight director assist output based on the error metric, wherein the control signal is based on the flight director assist output, and wherein the flight director assist system is further configured to provide, to the display, a graphical representation of boundaries of a flight director assist region.

Example 26 includes the aircraft of any of Examples 22 to 25, wherein the trajectory guidance data includes a lateral trajectory guidance indicator, a vertical trajectory guidance indicator, or a combination thereof.

Example 27 includes the aircraft of any of Examples 22 to 26, wherein the one or more processors are further configured to determine, based on a gain schedule, a gain to be applied to the error metric to generate a flight director assist output signal, and wherein the control signal is based, at least in part, on the flight director assist output signal.

Example 28 includes the aircraft of Example 27, wherein the gain schedule specifies gain values that increase as an absolute value of the error metric decreases.

Example 29 includes the aircraft of Example 27 or Example 28, wherein the gain schedule specifies zero gain for a first value of the error metric, zero gain for a second value of the error metric, and a non-zero gain for a third value of the error metric, wherein the third value is between the first value and the second value.

Example 30 includes the aircraft of Example 29, wherein the first value is a negative value of the error metric and the second value is a positive value of the error metric.

Example 31 includes the aircraft of any of Examples 22 to 30, wherein the one or more processors are further configured to detect a condition that satisfies a flight director assist disable criterion; and based on detecting the condition that satisfies the flight director assist disable criterion, generate a second control signal independently of the error metric.

Example 32 includes the aircraft of Example 31, wherein the flight director assist disable criterion is satisfied when a value of the error metric is less than a lower bound threshold associated with a flight director assist system or greater than an upper bound threshold associated with the flight director assist system.

Example 33 includes the aircraft of Example 31 or Example 32, wherein the flight director assist disable criterion is satisfied when a change to the one or more trajectory setpoints is detected.

Example 34 includes the aircraft of any of Examples 31 to 33, wherein the flight director assist disable criterion is satisfied based on a dwell time during which the error metric has a non-zero value that is greater than a lower bound threshold associated with a flight director assist system and is less than an upper bound threshold associated with the flight director assist system satisfying a dwell time threshold.

Example 35 includes the aircraft of any of Examples 22 to 34, wherein the control signal is generated based on the error metric responsive to detection of a condition that satisfies a flight director assist enable criterion.

Example 36 includes the aircraft of Example 35, wherein the flight director assist enable criterion is satisfied based on the error metric having a value that is greater than a lower bound threshold associated with a flight director assist system and is less than an upper bound threshold associated with the flight director assist system.

Example 37 includes the aircraft of Example 35 or Example 36, wherein the flight director assist enable criterion is satisfied after a delay period following disabling of a flight director assist system.

According to Example 38, a (optionally non-transitory) computer-readable medium stores instructions that, when executed by one or more processors, cause the one or more processors to obtain trajectory data associated with an aircraft operating in a manual flight mode; obtain trajectory guidance data from a flight director system of the aircraft; determine an error metric indicating deviation between the trajectory data and the trajectory guidance data; and generate, based on the error metric, a control signal for one or more control surfaces of the aircraft.

Example 39 includes the computer-readable medium of Example 38, wherein the instructions further cause the one or more processors to send the control signal to one or more actuators to cause movement of the one or more control surfaces.

Example 40 includes the computer-readable medium of Example 38 or Example 39, wherein the flight director system is configured to generate one or more trajectory guidance indicators based on the trajectory data and one or more trajectory setpoints and to provide the trajectory guidance indicators at a display of the aircraft.

Example 41 includes the computer-readable medium of Example 40, wherein a flight director assist system is configured to generate a flight director assist output based on the error metric, wherein the control signal is based on the flight director assist output, and wherein the flight director assist system is further configured to provide, to the display, a graphical representation of boundaries of a flight director assist region.

Example 42 includes the computer-readable medium of any of Examples 38 to 41, wherein the trajectory guidance data includes a lateral trajectory guidance indicator, a vertical trajectory guidance indicator, or a combination thereof.

Example 43 includes the computer-readable medium of any of Examples 38 to 42, wherein the trajectory data is based on sensor data from one or more sensors of the aircraft.

Example 44 includes the computer-readable medium of any of Examples 38 to 43, wherein the instructions further cause the one or more processors to determine, based on a gain schedule, a gain to be applied to the error metric to generate a flight director assist output signal, wherein the control signal is based, at least in part, on the flight director assist output signal.

Example 45 includes the computer-readable medium of Example 44, wherein the gain schedule specifies gain values that increase as an absolute value of the error metric decreases.

Example 46 includes the computer-readable medium of Example 44 or Example 45, wherein the gain schedule specifies zero gain for a first value of the error metric, zero gain for a second value of the error metric, and a non-zero gain for a third value of the error metric, wherein the third value is between the first value and the second value.

Example 47 includes the computer-readable medium of Example 46, wherein the first value is a negative value of the error metric and the second value is a positive value of the error metric.

Example 48 includes the computer-readable medium of any of Examples 38 to 47, wherein the instructions further cause the one or more processors to detect a condition that satisfies a flight director assist disable criterion; and based on detecting the condition that satisfies the flight director assist disable criterion, generate a second control signal independently of the error metric.

Example 49 includes the computer-readable medium of Example 48, wherein the flight director assist disable criterion is satisfied when a value of the error metric is less than a lower bound threshold associated with a flight director assist system or greater than an upper bound threshold associated with the flight director assist system.

Example 50 includes the computer-readable medium of Example 48 or Example 49, wherein the flight director assist disable criterion is satisfied when a change to one or more trajectory setpoints is detected.

Example 51 includes the computer-readable medium of any of Examples 48 to 50, wherein the flight director assist disable criterion is satisfied based on a dwell time during which the error metric has a non-zero value that is greater than a lower bound threshold associated with a flight director assist system and is less than an upper bound threshold associated with the flight director assist system satisfying a dwell time threshold.

Example 52 includes the computer-readable medium of any of Examples 38 to 51, wherein the control signal is generated based on the error metric responsive to detection of a condition that satisfies a flight director assist enable criterion.

Example 53 includes the computer-readable medium of Example 52, wherein the flight director assist enable criterion is satisfied based on the error metric having a value that is greater than a lower bound threshold associated with a flight director assist system and is less than an upper bound threshold associated with the flight director assist system.

Example 54 includes the computer-readable medium of Example 52 or Example 53, wherein the flight director assist enable criterion is satisfied after a delay period following disabling of a flight director assist system.

The illustrations of the examples described herein are intended to provide a general understanding of the structure of the various implementations. The illustrations are not intended to serve as a complete description of all of the elements and features of apparatus and systems that utilize the structures or methods described herein. Many other implementations may be apparent to those of skill in the art upon reviewing the disclosure. Other implementations may be utilized and derived from the disclosure, such that structural and logical substitutions and changes may be made without departing from the scope of the disclosure. For example, method operations may be performed in a different order than shown in the figures or one or more method operations may be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results may be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

## Claims

1. A method (400) comprising:
obtaining (402), at one or more processors (720), trajectory data (130) associated with an aircraft (600) operating in a manual flight mode;
obtaining (404), at the one or more processors, trajectory guidance data from a flight director system (104) of the aircraft;
determining (406), at the one or more processors, an error metric (136) indicating deviation between the trajectory data and the trajectory guidance data;
generating (408), at the one or more processors based on the error metric, a control signal (120) for one or more control surfaces (124) of the aircraft;
sending the control signal to one or more actuators (122) to cause movement of the one or more control surfaces; and
determining, based on a gain schedule (140), a gain to be applied to the error metric to generate a flight director assist output signal (142), wherein the gain schedule specifies gain values that increase as an absolute value of the error metric decreases, and wherein the control signal is based, at least in part, on the flight director assist output signal.

2. The method of any preceding claim, further comprising:
detecting a condition that satisfies a flight director assist disable criterion; and
based on said detecting the condition that satisfies the flight director assist disable criterion, generating a second control (318) signal independently of the error metric.

3. The method of claim 2, wherein the flight director assist disable criterion is satisfied when a value of the error metric is less than a lower bound threshold (314) associated with a flight director assist system or greater than an upper bound threshold (316) associated with the flight director assist system.

4. The method of claim 2 or claim 3, wherein the flight director assist disable criterion is satisfied when a change to one or more trajectory setpoints (132) is detected.

5. The method of any of claims 2 to 4, wherein the flight director assist disable criterion is satisfied based on a dwell time during which the error metric has a non-zero value that is greater than a lower bound threshold associated with a flight director assist system and is less than an upper bound threshold associated with the flight director assist system satisfying a dwell time threshold.

6. The method of any preceding claim, wherein the control signal is generated based on the error metric responsive to detection of a condition that satisfies a flight director assist enable criterion.

7. The method of claim 6, wherein the flight director assist enable criterion is satisfied based on the error metric having a value that is greater than a lower bound threshold associated with a flight director assist system and is less than an upper bound threshold associated with the flight director assist system, and based on elapse of a delay period following disabling of the flight director assist system.

8. An aircraft (600) comprising:
one or more line replaceable units (520) including one or more processors (720);
one or more actuators (122) coupled to one or more control surfaces (124) and communicatively coupled to at least one of the one or more line replaceable units to receive control signals (120); and
one or more sensors (110) coupled to at least one of the line replaceable units and configured to generate sensor data (112) indicative of a trajectory of the aircraft,
wherein the one or more processors are configured to, while in a manual flight mode:
generate, by a flight director system (104), trajectory guidance data based on one or more trajectory setpoints (132);
determine an error metric (136) indicating deviation between the trajectory of the aircraft and the trajectory guidance data;
send a control signal based on the error metric to the one or more actuators
wherein the control signal is configured to cause the one or more actuators to move the one or more control surfaces; and
wherein the one or more processors are further configured to determine, based on a gain schedule (140), a gain to be applied to the error metric to generate a flight director assist output signal (142), and wherein the control signal is based, at least in part, on the flight director assist output signal and wherein the gain schedule specifies gain values that increase as an absolute value of the error metric decreases.

9. The aircraft of claim 8, further comprising a display (150), wherein the one or more processors are configured to provide, to the display, a graphical representation of boundaries of a flight director assist region associated with enabling a flight director assist function.

10. The aircraft of any of claims 8 to 9, wherein the one or more processors are further configured to:
detect a condition that satisfies a flight director assist disable criterion; and
based on detecting the condition that satisfies the flight director assist disable criterion, generate a second control signal independently of the error metric.

11. The aircraft of claim 10, wherein the flight director assist disable criterion is satisfied when a value of the error metric is less than a lower bound threshold associated with a flight director assist system or greater than an upper bound threshold associated with the flight director assist system.

12. The aircraft of claim 10 or 11, wherein the flight director assist disable criterion is satisfied when a change to the one or more trajectory setpoints is detected.

13. The aircraft of any of claims 10 to 12, wherein the flight director assist disable criterion is satisfied based on a dwell time satisfying a dwell time threshold, wherein the dwell time corresponds to a period during which the error metric has a non-zero value that is greater than a lower bound threshold associated with a flight director assist system and is less than an upper bound threshold associated with the flight director assist system.

14. The aircraft of any of claims 9 to 13, wherein the control signal is generated based on the error metric responsive to a determination that the error metric has a value that is greater than a lower bound threshold associated with a flight director assist system and is less than an upper bound threshold associated with the flight director assist system.

15. A computer-readable medium (730, 740) storing instructions (734) that, when executed by one or more processors (720), cause the one or more processors to:
obtain trajectory data (130) associated with an aircraft (600) operating in a manual flight mode;
obtain trajectory guidance data from a flight director system (104) of the aircraft;
determine an error metric (136) indicating deviation between the trajectory data and the trajectory guidance data;
generate, based on the error metric, a control signal (120) for one or more control surfaces (124) of the aircraft,
send the control signal to one or more actuators (122) to cause movement of the one or more control surfaces; and
determine, based on a gain schedule (140), a gain to be applied to the error metric to generate a flight director assist output signal (142), wherein the gain schedule specifies gain values that increase as an absolute value of the error metric decreases, and wherein the control signal is based, at least in part, on the flight director assist output signal.

## Patentansprüche

1. Verfahren (400), das Folgendes umfasst:
Erhalten (402), an einem oder mehreren Prozessoren, (720) von Trajektoriendaten (130), die einem Flugzeug (600) zugeordnet sind, das in einem manuellen Flugmodus betrieben wird;
Erhalten (404), an den ein oder mehreren Prozessoren, von Trajektorienführungsdaten von einem Flugführungssystem (104) des Flugzeugs;
Bestimmen (406), an den ein oder mehreren Prozessoren, einer Fehlermetrik (136), die eine Abweichung zwischen den Trajektoriendaten und den Trajektorienführungsdaten anzeigt;
Erzeugen (408), an den ein oder mehreren Prozessoren basierend auf der Fehlermetrik, eines Steuersignals (120) für eine oder mehrere Steuerflächen (124) des Flugzeugs;
Senden des Steuersignals an ein oder mehrere Betätigungselemente (122), um eine Bewegung der ein oder mehreren Steuerflächen zu bewirken; und
Bestimmen, basierend auf einem Verstärkungsplan (140), einer Verstärkung, die auf die Fehlermetrik anzuwenden ist, um ein Flugführungsassistenz-Ausgangssignal (142) zu erzeugen, wobei der Verstärkungsplan Verstärkungswerte angibt, die mit abnehmendem Absolutwert der Fehlermetrik zunehmen, und wobei das Steuersignal zumindest teilweise auf dem Flugführungsassistenz-Ausgangssignal basiert.

2. Verfahren nach einem der vorhergehenden Ansprüche, das ferner Folgendes umfasst:
Erkennen einer Bedingung, die ein Flugführungsassistenz-Deaktivierungskriterium erfüllt; und
basierend auf dem Erkennen der Bedingung, die das Flugführungsassistenz-Deaktivierungskriterium erfüllt, Erzeugen eines zweiten Steuersignals (318) unabhängig von der Fehlermetrik.

3. Verfahren nach Anspruch 2, wobei das Flugführungsassistenz-Deaktivierungskriterium erfüllt ist, wenn ein Wert der Fehlermetrik kleiner als ein mit einem Flugführungsassistenzsystem verknüpfter unterer Schwellenwert (314) oder größer als ein mit dem Flugführungsassistenzsystem verknüpfter oberer Schwellenwert (316) ist.

4. Verfahren nach Anspruch 2 oder Anspruch 3, wobei das Flugführungsassistenz-Deaktivierungskriterium erfüllt ist, wenn eine Änderung an einem oder mehreren Trajektorien-Sollwerten (132) erkannt wird.

5. Verfahren nach einem der Ansprüche 2 bis 4, wobei das Flugführungsassistenz-Deaktivierungskriterium basierend auf einer Verweildauer erfüllt ist, während der die Fehlermetrik einen Wert ungleich Null aufweist, der größer ist als ein mit einem Flugführungsassistenzsystem verknüpfter unterer Schwellenwert und kleiner ist als ein mit dem Flugführungsassistenzsystem verknüpfter oberer Schwellenwert, der einen Verweildauerschwellenwert erfüllt.

6. Verfahren nach einem der vorstehenden Ansprüche, wobei das Steuersignal basierend auf der Fehlermetrik als Reaktion auf die Erkennung einer Bedingung erzeugt wird, die ein Flugführungsassistenz-Aktivierungskriterium erfüllt.

7. Verfahren nach Anspruch 6, wobei das Flugführungsassistenz-Aktivierungskriterium erfüllt ist, basierend darauf, dass die Fehlermetrik einen Wert hat, der größer ist als ein mit einem Flugführungsassistenzsystem verknüpfter unterer Schwellenwert und kleiner ist als ein mit dem Flugführungsassistenzsystem verknüpfter oberer Schwellenwert, und basierend darauf, dass eine Verzögerungszeit nach der Deaktivierung des Flugführungsassistenzsystems abgelaufen ist.

8. Flugzeug (600), das Folgendes umfasst:
eine oder mehrere Austauscheinheiten (520), die einen oder mehrere Prozessoren (720) aufweisen;
ein oder mehrere Betätigungselemente (122), die mit einer oder mehreren Steuerflächen (124) gekoppelt sind und kommunikationsfähig mit mindestens einer der ein oder mehreren austauschbaren Einheiten gekoppelt sind, um Steuersignale (120) zu empfangen; und
einen oder mehrere Sensoren (110), die mit mindestens einer der austauschbaren Einheiten gekoppelt und dazu ausgelegt sind, Sensordaten (112) zu erzeugen, die eine Trajektorie des Flugzeugs anzeigen,
wobei die ein oder mehreren Prozessoren im manuellen Flugmodus ausgelegt sind zum:
Erzeugen, durch ein Flugführungssystem (104), von Trajektorienführungsdaten basierend auf einem oder mehreren Trajektoriensollwerten (132);
Bestimmen einer Fehlermetrik (136), die eine Abweichung zwischen der Trajektorie des Flugzeugs und den Trajektorienführungsdaten anzeigt;
Senden eines Steuersignals basierend auf der Fehlermetrik an die ein oder mehreren Betätigungselemente,
wobei das Steuersignal dazu ausgelegt ist zu bewirken, dass die ein oder mehreren Betätigungselemente die ein oder mehreren Steuerflächen bewegen; und
wobei die ein oder mehreren Prozessoren ferner dazu ausgelegt sind, basierend auf einem Verstärkungsplan (140) eine Verstärkung zu bestimmen, die auf die Fehlermetrik anzuwenden ist, um ein Flugführungsassistenz-Ausgangssignal (142) zu erzeugen, und wobei das Steuersignal zumindest teilweise auf dem Flugführungsassistenz-Ausgangssignal basiert und wobei der Verstärkungsplan Verstärkungswerte festlegt, die mit abnehmendem Absolutwert der Fehlermetrik zunehmen.

9. Flugzeug nach Anspruch 8, ferner eine Anzeige (150) umfassend, wobei die ein oder mehreren Prozessoren dazu ausgelegt sind, an die Anzeige eine grafische Darstellung der Grenzen eines Flugführungsassistenzbereichs, der mit der Aktivierung einer Flugführungsassistenzfunktion verknüpft ist, bereitzustellen.

10. Flugzeug nach einem der Ansprüche 8 bis 9, wobei die ein oder mehreren Prozessoren ferner ausgelegt sind zum:
Erkennen einer Bedingung, die ein Flugführungsassistenz-Deaktivierungskriterium erfüllt; und
basierend auf dem Erkennen der Bedingung, die das Flugführungsassistenz-Deaktivierungskriterium erfüllt, Erzeugen eines zweiten Steuersignals unabhängig von der Fehlermetrik.

11. Flugzeug nach Anspruch 10, wobei das Flugführungsassistenz-Deaktivierungskriterium erfüllt ist, wenn ein Wert der Fehlermetrik kleiner als ein mit einem Flugführungsassistenzsystem verknüpfter unterer Schwellenwert oder größer als ein mit dem Flugführungsassistenzsystem verknüpfter oberer Schwellenwert ist.

12. Flugzeug nach Anspruch 10 oder 11, wobei das Flugführungsassistenz-Deaktivierungskriterium erfüllt ist, wenn eine Änderung an den ein oder mehreren Trajektorien-Sollwerten erkannt wird.

13. Flugzeug nach einem der Ansprüche 10 bis 12, wobei das Flugführungsassistenz-Deaktivierungskriterium basierend darauf erfüllt ist, dass eine Verweildauer einen Verweildauerschwellenwert erfüllt, wobei die Verweildauer einem Zeitraum entspricht, in dem die Fehlermetrik einen Wert ungleich Null aufweist, der größer ist als ein mit einem Flugführungsassistenzsystem verknüpfter unterer Schwellenwert und kleiner ist als ein mit dem Flugführungsassistenzsystem verknüpfter oberer Schwellenwert.

14. Flugzeug nach einem der Ansprüche 9 bis 13, wobei das Steuersignal basierend auf der Fehlermetrik in Reaktion auf eine Bestimmung erzeugt wird, dass die Fehlermetrik einen Wert hat, der größer ist als ein mit einem Flugführungsassistenzsystem verknüpfter unterer Schwellenwert und kleiner ist als ein mit dem Flugführungsassistenzsystem verknüpfter oberer Schwellenwert.

15. Computerlesbares Medium (730, 740), das Anweisungen (734) speichert, die bei Ausführung durch die ein oder mehreren Prozessoren (720) die ein oder mehreren Prozessoren veranlassen zum:
Erhalten von Trajektoriendaten (130), die einem Flugzeug (600) zugeordnet sind, das in einem manuellen Flugmodus betrieben wird;
Erhalten von Trajektorienführungsdaten von einem Flugführungssystem (104) des Flugzeugs;
Bestimmen einer Fehlermetrik (136), die eine Abweichung zwischen den Trajektoriendaten und den Trajektorienführungsdaten anzeigt;
Erzeugen, basierend auf der Fehlermetrik, eines Steuersignals (120) für eine oder mehrere Steuerflächen (124) des Flugzeugs,
Senden des Steuersignals an ein oder mehrere Betätigungselemente (122), um eine Bewegung der ein oder mehreren Steuerflächen zu bewirken; und
Bestimmen, basierend auf einem Verstärkungsplan (140), einer Verstärkung, die auf die Fehlermetrik anzuwenden ist, um ein Flugführungsassistenz-Ausgangssignal (142) zu erzeugen, wobei der Verstärkungsplan Verstärkungswerte angibt, die mit abnehmendem Absolutwert der Fehlermetrik zunehmen, und wobei das Steuersignal zumindest teilweise auf dem Flugführungsassistenz-Ausgangssignal basiert.

## Revendications

1. Procédé (400) comprenant :
l'obtention (402), au niveau d'un ou plusieurs processeurs (720), de données de trajectoire (130) associées à un aéronef (600) fonctionnant dans un mode de vol manuel ;
l'obtention (404), au niveau des un ou plusieurs processeurs, de données de guidage de trajectoire d'un système de directeur de vol (104) de l'aéronef ;
la détermination (406), au niveau des un ou plusieurs processeurs, d'une métrique d'erreur (136) indiquant un écart entre les données de trajectoire et les données de guidage de trajectoire ;
la génération (408), au niveau des un ou plusieurs processeurs, sur la base de la métrique d'erreur, d'un signal de commande (120) pour une ou plusieurs gouvernes (124) de l'aéronef ;
l'envoi du signal de commande à un ou plusieurs actionneurs (122) pour provoquer le mouvement des une ou plusieurs gouvernes ; et
la détermination, sur la base d'un programme de gain (140), d'un gain à appliquer à la métrique d'erreur pour générer un signal de sortie d'assistance de directeur de vol (142), où le programme de gain spécifie des valeurs de gain qui augmentent lorsque la métrique d'erreur diminue, et où le signal de commande est basé, au moins en partie, sur le signal de sortie d'assistance de directeur de vol.

2. Procédé selon l'une quelconque des revendications précédentes, comprenant en outre :
la détection d'une condition qui vérifie un critère de désactivation d'assistance de directeur de vol ; et
sur la base de ladite détection de la condition qui satisfait le critère de désactivation de l'assistance du directeur de vol, la génération d'un deuxième signal de commande (318) indépendamment de la métrique d'erreur.

3. Procédé selon la revendication 2, dans lequel le critère de désactivation de l'assistance de directeur de vol est satisfait lorsqu'une valeur de la métrique d'erreur est inférieure à un seuil de limite inférieure (314) associé à un système d'assistance de directeur de vol ou supérieure à un seuil de limite supérieure (316) associé au système d'assistance de directeur de vol.

4. Procédé selon la revendication 2 ou la revendication 3, dans lequel le critère de désactivation de l'assistance de directeur de vol est satisfait lorsqu'un changement à un ou plusieurs points de consigne de trajectoire (132) est détecté.

5. Procédé selon l'une quelconque des revendications 2 à 4, dans lequel le critère de désactivation de l'assistance de directeur de vol est satisfait sur la base d'un temps de séjour pendant lequel la métrique d'erreur a une valeur non nulle qui est supérieure à un seuil de limite inférieure associé à un système d'assistance de directeur de vol et qui est inférieure à un seuil de limite supérieure associé au système d'assistance de directeur de vol satisfaisant à un seuil de temps de séjour.

6. Procédé selon l'une quelconque des revendications précédentes, dans lequel le signal de commande est généré sur la base de la métrique d'erreur en réponse à la détection d'une condition qui satisfait un critère d'activation d'assistance de directeur de vol.

7. Procédé selon la revendication 6, dans lequel le critère d'activation de l'assistance de directeur de vol est satisfait sur la base de la métrique d'erreur ayant une valeur qui est supérieure à un seuil de limite inférieure associé à un système d'assistance de directeur de vol et qui est inférieure à un seuil de limite supérieure associé au système d'assistance de directeur de vol, et sur la base de l'écoulement d'une période de retard après la désactivation du système d'assistance de directeur de vol.

8. Aéronef (600) comprenant :
une ou plusieurs unités remplaçables en ligne (520) comprenant un ou plusieurs processeurs (720) ;
un ou plusieurs actionneurs (122) couplés à une ou plusieurs gouvernes (124) et couplés de manière communicante à au moins l'une des une ou plusieurs unités remplaçables en ligne pour recevoir des signaux de commande (120) ; et
un ou plusieurs capteurs (110) couplés à au moins une des unités remplaçables en ligne et configurés pour générer des données de capteurs (112) indicatives d'une trajectoire de l'aéronef,
où les un ou plusieurs processeurs sont configurés pour, dans un mode de vol manuel :
générer, par un système directeur de vol (104), des données de guidage de trajectoire sur la base d'une ou plusieurs consignes de trajectoire (132) ;
déterminer une métrique d'erreur (136) indiquant un écart entre la trajectoire de l'aéronef et les données de guidage de trajectoire ;
envoyer, aux un ou plusieurs actionneurs, un signal de commande basé sur la métrique d'erreur
où le signal de commande est configuré pour amener les un ou plusieurs actionneurs à déplacer les une ou plusieurs gouvernes ; et
où les un ou plusieurs processeurs sont en outre configurés pour déterminer, sur la base d'un programme de gain (140), un gain à appliquer à la métrique d'erreur pour générer un signal de sortie d'assistance de directeur de vol (142), et où le signal de commande est basé, au moins en partie, sur le signal de sortie d'assistance de directeur de vol, et où le programme de gain spécifie des valeurs de gain qui augmentent lorsque la métrique d'erreur diminue.

9. Aéronef selon la revendication 8, comprenant en outre un affichage (150), où les un ou plusieurs processeurs sont configurés pour fournir, à l'affichage, une représentation graphique des limites d'une région d'assistance de directeur de vol associée à l'activation d'une fonction d'assistance de directeur de vol.

10. Aéronef selon l'une quelconque des revendications 8 et 9, dans lequel les un ou plusieurs processeurs sont en outre configurés pour :
détecter une condition qui vérifie un critère de désactivation d'assistance de directeur de vol ; et
sur la base de la détection de la condition qui satisfait le critère de désactivation de l'assistance du directeur de vol, générer un deuxième signal de commande indépendamment de la métrique d'erreur.

11. Aéronef selon la revendication 10, dans lequel le critère de désactivation de l'assistance de directeur de vol est satisfait lorsqu'une valeur de la métrique d'erreur est inférieure à un seuil de limite inférieure associé à un système d'assistance de directeur de vol ou supérieure à un seuil de limite supérieure associé au système d'assistance de directeur de vol.

12. Aéronef selon la revendication 10 ou la revendication 11, dans lequel le critère de désactivation de l'assistance de directeur de vol est satisfait lorsqu'un changement à un ou plusieurs points de consigne de trajectoire est détecté.

13. Aéronef selon l'une quelconque des revendications 10 à 12, dans lequel le critère de désactivation de l'assistance de directeur de vol est satisfait sur la base d'un temps de séjour satisfaisant un seuil de temps de séjour, où le temps de séjour correspond à une période pendant laquelle la métrique d'erreur a une valeur non nulle qui est supérieure à un seuil de limite inférieure associé à un système d'assistance de directeur de vol et est inférieure à un seuil de limite supérieure associé au système d'assistance de directeur de vol.

14. Aéronef selon l'une quelconque des revendications 9 à 13, dans lequel le signal de commande est généré sur la base de la métrique d'erreur en réponse à une détermination selon laquelle la métrique d'erreur a une valeur qui est supérieure à un seuil de limite inférieure associé à un système d'assistance de directeur de vol et qui est inférieure à un seuil de limite supérieure associé au système d'assistance de directeur de vol.

15. Support lisible par ordinateur (730, 740) stockant des instructions (734) qui, lorsqu'elles sont exécutées par un ou plusieurs processeurs (720), amènent les un ou plusieurs processeurs à :
obtenir des données de trajectoire (130) associées à un aéronef (600) fonctionnant dans un mode de vol manuel ;
obtenir des données de guidage de trajectoire d'un système de directeur de vol (104) de l'aéronef ;
déterminer une métrique d'erreur (136) indiquant un écart entre les données de trajectoire et les données de guidage de trajectoire ;
générer, sur la base de la métrique d'erreur, un signal de commande (120) pour une ou plusieurs gouvernes (124) de l'aéronef,
envoyer le signal de commande à un ou plusieurs actionneurs (122) pour provoquer le mouvement des une ou plusieurs gouvernes ; et
déterminer, sur la base d'un programme de gain (140), un gain à appliquer à la métrique d'erreur pour générer un signal de sortie d'assistance de directeur de vol (142), où le programme de gain spécifie des valeurs de gain qui augmentent lorsque la métrique d'erreur diminue, et où le signal de commande est basé, au moins en partie, sur le signal de sortie d'assistance de directeur de vol.
